# EUROPEAN PATENT SPECIFICATION

(11) **EP 3 034 681 B1**
(45) Date of publication and mention of the grant of the patent: **26.07.2017**
(21) Application number: 15201310.8
(22) Date of filing: 18.12.2015
(51) Int. Cl.: D06F 58/20, D06F 58/28, D06F 58/10

(54) **CONTROL METHOD OF CLOTHES TREATMENT APPARATUS**
STEUERUNGSVERFAHREN EINER KLEIDUNGSBEHANDLUNGSVORRICHTUNG
PROCÉDÉ DE COMMANDE D'UN APPAREIL DE TRAITEMENT DE LINGE

(30) Priority: 19.12.2014 KR 20140184453
(43) Date of publication of application: 22.06.2016
(73) Proprietor: LG Electronics Inc., Seoul 07336 (KR)
(72) Inventor: PARK, Hyoungsup, Seoul 08592 (KR); DOH, Youngjin, Seoul 08592 (KR); PARK, Sunghoo, Seoul 08592 (KR)
(74) Representative: Vossius & Partner Patentanwälte Rechtsanwälte mbB

(56) References cited:
- EP-A2- 1 616 516
- WO-A2-2009/123407
- KR-A- 20080 083 995
- KR-A- 20080 107 787
- US-A1- 2008 155 757
- US-A1- 2014 238 086

## Description

The present invention relates to a control method of a clothes treatment apparatus.

Clothes treatment apparatuses are apparatuses that treat clothes, e.g. wash and dry clothes and smooth wrinkles in clothes, at home or at laundromats.

Clothes treatment apparatuses may be classified into a washer for washing clothes, a dryer for drying clothes, a washer/dryer having both a washing function and a drying function, a refresher for refreshing clothes, and a steamer for removing unnecessary wrinkles in clothes.

The refresher is an apparatus that keeps clothes comfortable and fresh. The refresher functions to dry clothes, to supply fragrance to clothes, to prevent the occurrence of static electricity in clothes, or to remove wrinkles from clothes.

The steamer is an apparatus that simply supplies steam to clothes in order to remove wrinkles from the clothes. Unlike a general iron, the steamer removes wrinkles from the clothes without directly applying heat to the clothes.

A clothes treatment apparatus having both functions of a refresher and a steamer may remove wrinkles from clothes received in the clothes treatment apparatus, and may additionally deodorize the clothes, using steam and hot air.

An example of such a conventional treatment apparatus is disclosed in Korean Patent Application Publication No. 10-2014-0016093. A control method of a clothes treatment apparatus is disclosed in US 2014 / 0238086 A1. Therefore, the present invention has been made in view of the above problems, and it is an object of the present invention to provide a control method of a clothes treatment apparatus that is capable of removing residual water that leaks from a water supply tank.
This object is solved by the independent claim. The dependent claims relate to further aspects of the invention.

In accordance with an aspect of the present invention, the above and other objects can be accomplished by the provision of a control method of a clothes treatment apparatus including a cabinet partitioned into a treatment chamber for allowing clothes to be hung therein, a cycle chamber for allowing machinery to be installed therein, and a tank installation space for allowing a separable tank to be installed therein, a steam unit disposed in the cycle chamber for supplying steam into the treatment chamber, a water supply tank installed in the tank installation space, such that the water supply tank is connected to the steam unit, for supplying water to the steam unit, a water supply pump configured to be operated to supply the water in the water supply tank to the steam unit, a lower cabinet disposed in the tank installation space such that the water supply tank is separably coupled to the lower cabinet, and a receiving space formed at the lower cabinet, such that the receiving space is connected to the steam unit, for supplying water to the steam unit and storing residual water discharged during separation of the water supply tank, wherein the control method includes sensing the level of water in the water supply tank and, upon determining that the level of water in the water supply tank is low, operating the water supply pump to move the residual water stored in the receiving space to the steam unit.

The control method may further include raising a water replenishment alarm, wherein the step of raising the water replenishment alarm may be performed between the step of sensing the level of water in the water supply tank and the step of operating the water supply pump to move the residual water stored in the receiving space to the steam unit or after the step of operating the water supply pump to move the residual water stored in the receiving space to the steam unit.

The step of operating the water supply pump to move the residual water stored in the receiving space to the steam unit may include operating the water supply pump for a predetermined period of time and stopping the operation of the water supply pump after the predetermined period of time.

The step of operating the water supply pump to move the residual water stored in the receiving space to the steam unit may include operating the water supply pump for a period of time that it takes to move all of the water in the water supply tank to the steam unit.

The control method may further include sensing a level of water in the steam unit and determining whether the level of water in the steam unit is low, the step of sensing the level of water in the steam unit and the step of determining whether the level of water in the steam unit is low being performed before the step of sensing the level of water in the water supply tank, wherein the step of sensing the level of water in the water supply tank may be performed upon determining that the level of water in the steam unit is low.

The receiving space may be formed so as to be open toward the tank installation space.

The lower cabinet may further include a water pocket formed so as to protrude into the tank installation space, the receiving space may be formed inside the water pocket, and the water supply tank may be mounted on the water pocket such that the water supply tank is supported by the water pocket.

The lower cabinet may further include a water barrier formed at the water pocket such that the water barrier protrudes upward from the water pocket, and the receiving space may be located inside the water barrier.

The lower cabinet may include a lower base for allowing a drainage tank for storing condensed water and the water supply tank to be mounted thereon, a lower back connected to the lower base, the lower back being assembled with a tank module frame for partitioning the cycle chamber and the tank installation space from each other, and a lower partition wall for partitioning a first installation part for allowing the water supply tank to be installed thereon and a second installation part for allowing the drainage tank to be installed thereon from each other, and wherein the receiving space may be disposed on the first installation part.

The control method may further include raising a water replenishment alarm, wherein the step of raising the water replenishment alarm may be performed between the step of sensing the level of water in the water supply tank and the step of operating the water supply pump to move the residual water stored in the receiving space to the steam unit or after the step of operating the water supply pump to move the residual water stored in the receiving space to the steam unit, and wherein the step of operating the water supply pump to move the residual water stored in the receiving space to the steam unit may include operating the water supply pump for a predetermined period of time and stopping the operation of the water supply pump after the predetermined period of time.

The control method may further include raising a water replenishment alarm, wherein the step of raising the water replenishment alarm may be performed between the step of sensing the level of water in the water supply tank and the step of operating the water supply pump to move the residual water stored in the receiving space to the steam unit or after the step of operating the water supply pump to move the residual water stored in the receiving space to the steam unit, wherein the step of operating the water supply pump to move the residual water stored in the receiving space to the steam unit may include operating the water supply pump for a predetermined period of time and stopping the operation of the water supply pump after the predetermined period of time, and wherein the step of operating the water supply pump to move the residual water stored in the receiving space to the steam unit may include operating the water supply pump for a period of time that it takes to move all of the water in the water supply tank to the steam unit.

The step of operating the water supply pump to move the residual water stored in the receiving space to the steam unit may include operating the water supply pump for a predetermined period of time and stopping the operation of the water supply pump after the predetermined period of time, and wherein the step of operating the water supply pump to move the residual water stored in the receiving space to the steam unit may include operating the water supply pump for a period of time that it takes to move all of the water in the water supply tank to the steam unit.

The control method may further include sensing the level of water in the steam unit and determining whether the level of water in the steam unit is low, the step of sensing the level of water in the steam unit and the step of determining whether the level of water in the steam unit is low being performed before the step of sensing the level of water in the water supply tank, wherein the step of sensing the level of water in the water supply tank may be performed upon determining that the level of water in the steam unit is low, wherein the step of operating the water supply pump to move the residual water stored in the receiving space to the steam unit may include operating the water supply pump for a predetermined period of time and stopping the operation of the water supply pump after the predetermined period of time, and wherein the step of operating the water supply pump to move the residual water stored in the receiving space to the steam unit may include operating the water supply pump for a period of time that it takes to move all of the water in the water supply tank to the steam unit.

The lower cabinet may further include a water pocket formed so as to protrude into the tank installation space, the receiving space may be formed inside the water pocket, and the water supply tank may be mounted on the water pocket such that the water supply tank is supported by the water pocket, wherein the lower cabinet may include a lower base for allowing a drainage tank for storing condensed water and the water supply tank to be mounted thereon, a lower back connected to the lower base, the lower back being assembled with a tank module frame for partitioning the cycle chamber and the tank installation space from each other, and a lower partition wall for partitioning a first installation part for allowing the water supply tank to be installed thereon and a second installation part for allowing the drainage tank to be installed thereon from each other, and wherein the receiving space is disposed on the first installation part.

### BRIEF DESCRIPTION OF THE DRAWINGS

The embodiments will be described in detail with reference to the following drawings in which like reference numerals refer to like elements wherein:
FIG. 1 is a perspective view of a clothes treatment apparatus according to a first embodiment of the present invention;
FIG. 2 is an exploded perspective view of a cycle assembly according to a first embodiment of the present invention;
FIG. 3 is a perspective view of the cycle assembly according to the first embodiment of the present invention;
FIG. 4 is an exploded perspective view of a water supply tank shown in FIG. 1;
FIG. 5 is a partially exploded perspective view of the water supply tank shown in FIG. 1;
FIG. 6 is a sectional perspective view of a check assembly shown in FIG. 5;
FIG. 7 is a side sectional view of the water supply tank shown in FIG. 1;
FIG. 8 is a perspective view of a drainage tank shown in FIG. 1;
FIG. 9 is a partially exploded perspective view of the drainage tank shown in FIG. 1;
FIG. 10 is a side sectional view of the drainage tank shown in FIG. 1;
FIG. 11 is a perspective view of a lower cabinet shown in FIG. 1;
FIG. 12 is a perspective view of the lower cabinet shown in FIG. 11;
FIG. 13 is a block diagram of the clothes treatment apparatus shown in FIG. 1;
FIG. 14 is a flowchart showing a control method of a clothes treatment apparatus according to a first embodiment of the present invention; and
FIG. 15 is a flowchart showing a control method of a clothes treatment apparatus according to a second embodiment of the present invention.

### DETAILED DESCRIPTION OF THE PREFERRED EMBODIMENTS

The present invention will be described in detail with reference to the accompanying drawings.

In the following description of the present invention, a detailed description of known functions or configurations incorporated herein will be omitted when it may make the subject matter of the present invention rather unclear. The same terms may be denoted by different reference numerals if the terms indicate different parts.

The terms used in the following description are terms defined taking into consideration the functions obtained in accordance with the present invention. The definitions of these terms should be determined based on the whole content of this specification because they may be changed in accordance with the intentions of users, such as experimenters and measurers, or usual practices.

In this specification, the terms "first," "second," etc. are used to describe various elements. However, the elements are not limited by the terms. The terms are used only to distinguish one element from another element. For example, a first element may be named a second element, and a second element may be named a first element, without departing from the scope of right of the present invention. It will be understood that the term "and/or" refers to one or more possible combinations of specified relevant items and includes such combinations.

The terms used in this specification are provided only to explain specific embodiments, but are not intended to restrict the present invention. A singular representation may include a plural representation unless it represents a definitely different meaning from the context.

Unless otherwise defined, all terms, including technical and scientific terms, used in this specification have the same meaning as commonly understood by a person having ordinary skill in the art to which the present invention pertains. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In addition, the terms "comprises" and "includes" described herein should be interpreted not to exclude other elements but to further include such other elements since the corresponding elements may be inherent unless mentioned otherwise.

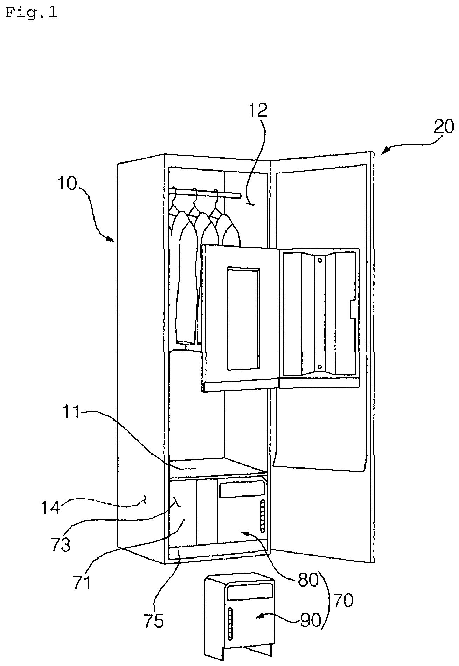

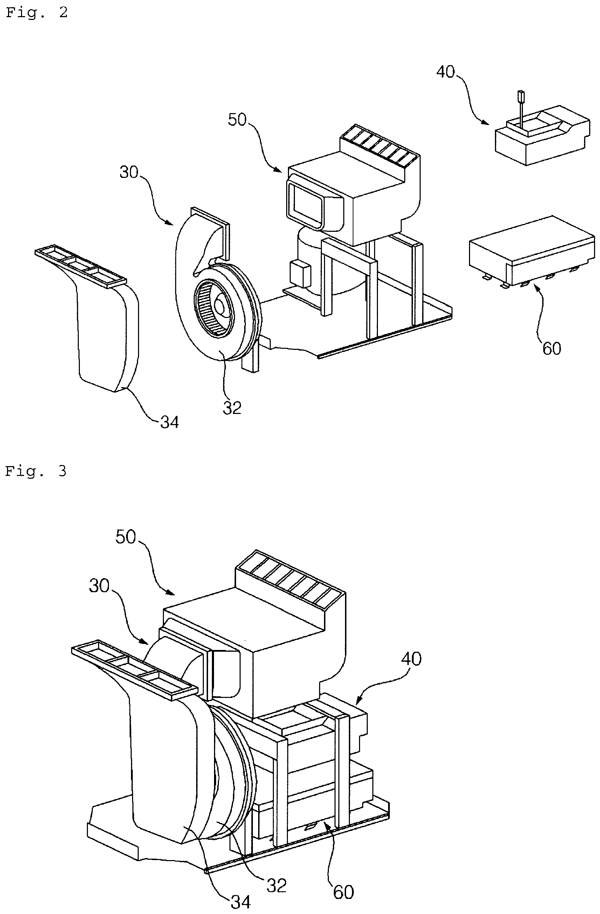

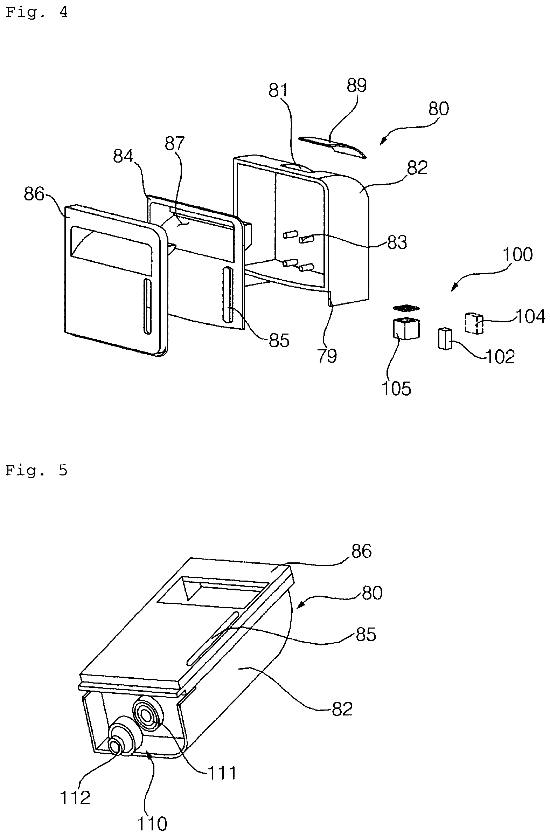

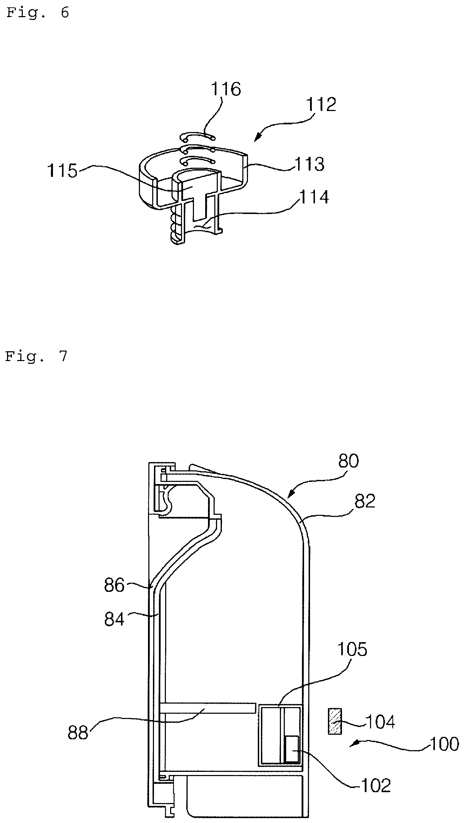

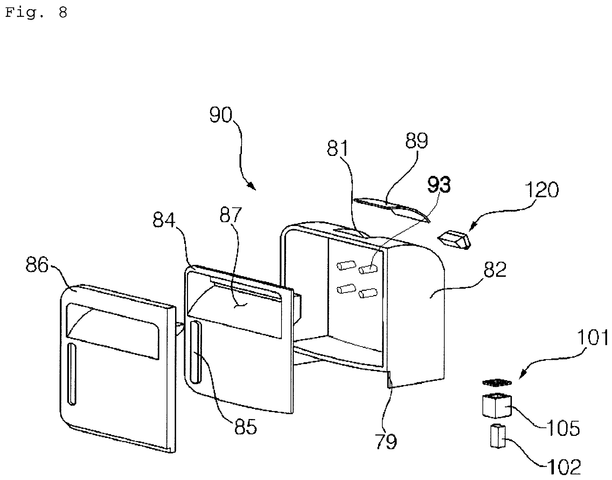

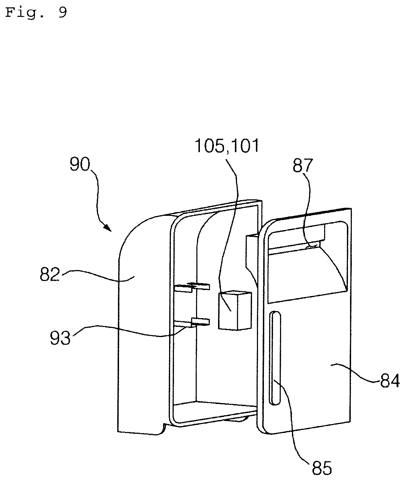

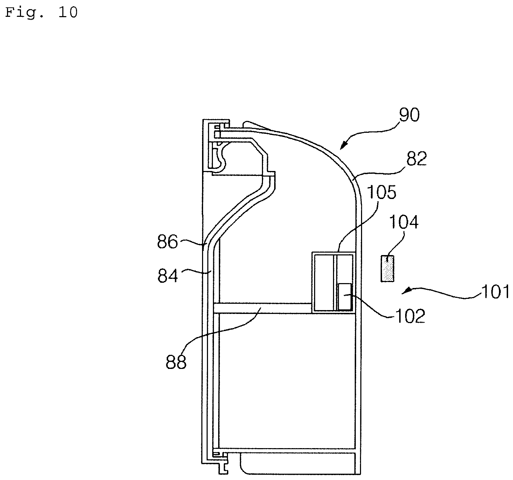

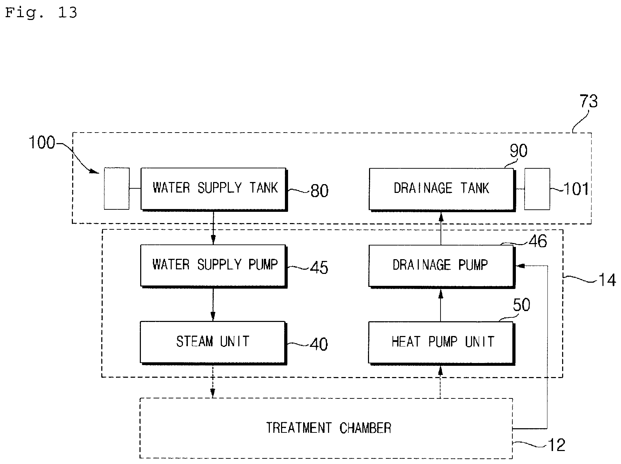

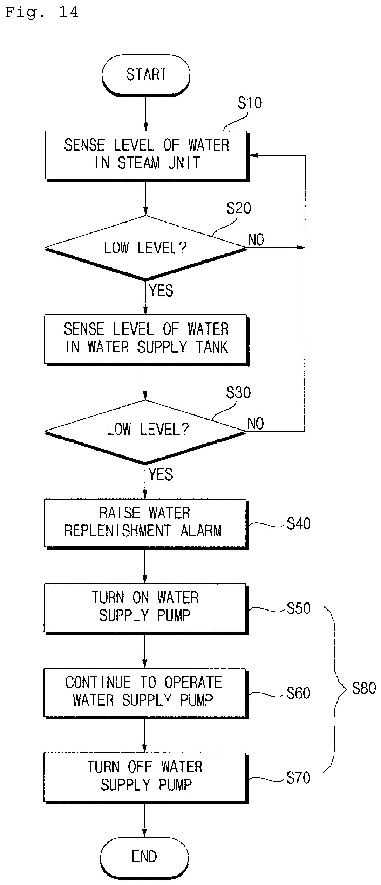

Hereinafter, a clothes treatment apparatus according to a first embodiment of the present invention and a control method of a clothes treatment apparatus according to a first embodiment of the present invention will be described with reference to FIGS. 1 to 14.

The clothes treatment apparatus according to this embodiment includes a cabinet 10 and a door 20 configured to open and close the front of the cabinet 10.

The interior of the cabinet 10 is partitioned into upper and lower interior parts by a partition plate 11. A treatment chamber 12, in which clothes are hung, is defined in the interior of the cabinet 10 above the partition plate 11. A cycle chamber 14, in which machinery is installed, is defined in the interior of the cabinet 10 below the partition plate 11.

Clothes are hung in the treatment chamber 12. In the treatment chamber 12, wrinkles in the clothes are smoothed, or the clothes are deodorized, by the circulation of steam or air.

A blowing unit 30 for circulating air in the treatment chamber 12, a steam unit 40 for supplying steam into the treatment chamber 12, a heat pump unit 50 for conditioning air in the treatment chamber 12, and a control unit 60 for controlling the respective units 30, 40, and 50 are installed in the cycle chamber 14.

In this embodiment, an assembly of machinery, including the blowing unit 30, the steam unit 40, the heat pump unit 50, and the control unit 60, which are required to perform respective cycles of the clothes treatment apparatus, is defined as a cycle assembly.

The blowing unit 30 includes a blowing fan 32 and an inlet duct 34.

The inlet duct 34 is installed at the suction side of the blowing fan 32 to guide air in the treatment chamber 12 to the blowing fan 32.

The blowing fan 32 is rotated to blow air. The blowing fan 32 suctions air from the treatment chamber 12, and discharges the suctioned air to the heat pump unit 50.

When the steam unit 40 is powered on, heat is generated from the steam unit 40. The steam unit 40 converts water supplied from a water supply tank 80, which will be described hereinafter, into steam. The generated steam is discharged into the treatment chamber 12.

In this embodiment, a flow channel is defined such that the steam flows into the treatment chamber 12 via the heat pump unit 50.

The heat pump unit 50 constitutes a heat pump cycle including a compressor, a condenser, an evaporator, and an expansion valve. Based on the operation mode of the heat pump unit 50, cooled air or heated air may be discharged into the treatment chamber 12.

In particular, the heat pump unit 50 may dehumidify air supplied from the blowing unit 30.

A tank module 70 for storing water is installed in front of the cycle chamber 14. The tank module 70 includes a water supply tank 80 for supplying water to the steam unit 40 and a drainage tank 90 for gathering and storing condensed water that is generated in the treatment chamber 12.

Water from the water supply tank 80 flows to the steam unit 40 via a water supply pump 45.

Water that is condensed in the treatment chamber 12, flows to the lower side of the treatment chamber 12 due to gravity, and is then pumped to the drainage tank 90 by a drainage pump 46. Water that is condensed in the heat pump unit 50 also flows to the drainage tank 90 via the drainage pump 46.

The water supply pump 45 or the drainage pump 46 is controlled by the control unit 60.

In this embodiment, a tank module frame 71 is installed in front of the inlet duct 34.

A tank installation space 73 is defined between the tank module frame 71 and the door 20. The tank module frame 71 is coupled to the partition plate 11 to isolate the cycle chamber 14 from the outside.

A tank support bar 75, which interferes with at least one selected from between the water supply tank 80 and the drainage tank 90, is installed in front of the tank installation space 73.

The tank support bar 75 prevents the water supply tank 80 or the drainage tank 90 from being unintentionally separated from the tank installation space 73. The tank support bar 75 supports the front of the water supply tank 80 and the front of the drainage tank 90.

When the door 20 is opened and closed, therefore, the water supply tank 80 and the drainage tank 90 are prevented from being separated from the tank installation space 73.

In this embodiment, the lower end of the water supply tank 80 is placed on the upper end of the tank support bar 75, and the lower end of the drainage tank 90 is placed on the upper end of the tank support bar 75.

A tank support end 79, which interferes with the tank support bar 75, is formed on at least one selected from between the water supply tank 80 and the drainage tank 90.

The tank support end 79 is concavely recessed.

The front of the tank support bar 75 and the front of the water supply tank 80 may form a continuous surface due to the tank support end 79. In addition, the front of the tank support bar 75 and the front of the drainage tank 90 may form a continuous surface due to the tank support end 79

The water supply tank 80 and the drainage tank 90 are disposed in the tank installation space 73 such that the water supply tank 80 and the drainage tank 90 are arranged parallel to each other in rightward and leftward directions.

When the door 20 is opened, the water supply tank 80 and the drainage tank 90 are exposed to a user.

The water supply tank 80 and the drainage tank 90 may be withdrawn by the user.

The water supply tank 80 and the drainage tank 90 may be separated from the tank module frame 71. The water supply tank 80 and the drainage tank 90 may be separably mounted in the tank installation space 73.

The water supply tank 80 is connected to the steam unit 40 to supply water to the steam unit 40. The drainage tank 90 is connected to the treatment chamber 12 to store water discharged from the treatment chamber 12 or the heat pump unit 50.

The water supply tank 80 includes a tank body 82, which is open at the front thereof, a tank cover 84 coupled to the front of the tank body 82, a decorative cover 86 coupled to the tank cover 84, a water supply check valve 110 installed in the tank body 82 for opening and closing a flow channel connected with the steam unit 40, and a water supply level sensor 100 for sensing the level of water stored in the tank body 82.

The front of the tank body 82 is open. The water supply level sensor 100 is disposed in the tank body 82.

The upper end of the tank body 82 is round at the rear side thereof.

When the tank body 82 is separated, interference between the tank body 82 and the partition plate 11 is minimized.

The user may easily pull and withdraw the water tank 80, which is disposed at the lower side of the clothes treatment apparatus, due to the round shape of the tank body 82.

In this embodiment, the water supply level sensor 100 includes a float 102 installed in the tank body 82 such that the float 102 can move upward and downward based on the level of water stored in the tank body 82, a float cabinet 105 installed in the tank body 82 in a state in which the float 102 is disposed in the float cabinet 105, and a sensor 104 installed at the tank module frame 71 to sense the float 102.

The float 102 has a magnet. The sensor 104 senses the magnetic force of the magnet.

The sensor 104 may be installed at the front or rear of the tank module frame 71.

The sensor 104 may be installed through the tank module frame 71.

Consequently, the sensor 104 may be located in any one selected from among the cycle chamber 14, the tank installation space 73, and the tank module frame 71.

The float 102, which is installed in the water supply tank 80, is flush with the sensor 104. When the level of water stored in the water supply tank 80 is lowered, the float 102 moves lower than the sensor 104. When the sensor 104 fails to sense the float 102, therefore, the control unit 60 outputs a water deficiency signal. Even when the water deficiency signal is output, it is possible to supply a sufficient amount of steam during a cycle that is currently being performed.

Since the sensor 104 constantly senses the float 102, the control unit 60 may determine whether the water supply tank 80 is mounted.

For example, when the water supply tank 80 is not mounted, or when water is deficient, the control unit 60 outputs a water deficiency signal.

When the user manipulates the clothes treatment apparatus in a state in which the water deficiency signal is output, therefore, the control unit 60 performs control such that the clothes treatment apparatus is not operated and outputs a water deficiency signal. At this time, the user may check the water supply tank 80.

A float installation part 83, at which the float 102 is installed, is formed at the inside of the tank body 82. The float cabinet 105 is installed at the float installation part 83. The float 102 may move upward and downward along the float cabinet 105 by buoyancy.

In this embodiment, the float 102 is installed at the minimum level of water stored in the water supply tank 80, at which it is possible to supply an amount of steam corresponding to one cycle. Even when the sensor 104 fails to sense the float 102, and therefore the control unit 60 outputs a water deficiency signal, it is possible to supply an amount of steam corresponding to at least one cycle.

That is, even when a water deficiency signal is sensed during the supply of steam, it is possible to supply a sufficient amount of steam until a cycle that is currently being performed is completed.

The float cabinet 105, in which the float 102 is mounted, is manufactured by insert injection molding at the time of die slide injection (DSI) of the tank cover 84 and the tank body 82.

Die slide injection (DSI) is a molding technology that has been developed for blow molding or molding of thin products. DSI conveys various advantages in that no post-processing, such as adhesion or assembly, is necessary after injection molding, it is possible to adjust the thickness of a wall more easily than when blow molding or gas molding, it is possible to provide an excellent surface shape or high dimensional accuracy, and it is possible to perform DSI more easily than double injection or blow molding. The manufacturing of products using DSI is ordinarily known in the art to which the present invention pertains, and therefore a detailed description thereof will be omitted.

The tank body 82 and the tank cover 84 are manufactured by insert injection molding using DSI. During the manufacturing of the tank body 82 and the tank cover 84, the float cabinet 105 is installed in the tank body 82 and the tank cover 84 by insert injection molding. During the manufacturing of the tank body 82 and the tank cover 84, the edge of the tank cover 84 is integrally coupled to the edge of the tank body 82.

The tank cover 84 has a window 85, through which the user may check the level of water in the tank body 82. In addition, a grip 87, into which the user may insert his/her hand in order to hold the tank cover 84, is concavely formed at the tank cover 84.

The grip 87 is formed at the tank cover 84 such that the grip 87 is concave from the front to the rear thereof.

A sensor fixing part 88 is formed at the inside of the tank cover 84. The sensor fixing part 88 protrudes from the inside of the tank cover 84. When the tank cover 84 and the tank body 82 are coupled to each other, the sensor fixing part 88 comes into tight contact with the float cabinet 105.

Since the sensor fixing part 88 tightly contacts the float cabinet 105, the float cabinet 105 is prevented from being separated from the float installation part 83.

The sensor fixing part 88 may be integrally formed with the tank cover 84.

The decorative cover 86 is formed to have a shape that is capable of covering the front of the tank cover 84. In addition, the decorative cover 86 is formed to have a shape corresponding to the shape of the tank cover 84.

A water hole 81 is formed at the upper side of the tank body 82. In addition, a water hole cover 89 for opening and closing the water hole 81 is disposed at the upper side of the tank body 82.

The water hole cover 89 is made of a flexible material exhibiting high elasticity. One end of the water hole cover 89 is fixed to the tank body 82, and the other end of the water hole cover 89 may be bent in order to open and close the water hole 82.

The water supply check valve 110 includes a check valve hole 111 formed at the lower side of the tank body 82 and a check assembly 112 coupled to the check valve hole 111 for regulating the water in the tank body 82.

The check assembly 112 includes a check housing 113 coupled into the check valve hole 111, the check housing 113 having a check flow channel 114, through which water flows into the check housing 113, a valve 115 disposed in the check housing 113 for opening and closing the check flow channel 114, and a check elastic member 116 disposed between the valve 115 and the tank body 82 for applying elastic force to the valve 115.

The small-diameter side of the valve 115 protrudes downward. When the valve 115 is placed on the tank module frame 71, the valve 115 may be pushed by the tank module frame 71, and may thus move upward. At this time, the check flow channel 114 is opened as the result of the movement of the valve 115. When the water supply tank 80 is separated from the tank module frame 71, the check flow channel 114 is closed by the elastic force of the check elastic member 116.

The drainage tank 90 is identical in function to the water supply tank 80. The drainage tank 90 is disposed alongside the water supply tank 80.

In the drainage tank 90, a drainage check valve 120 is installed at the rear side thereof, not at the lower side thereof, unlike the water supply tank 80.

The water supply tank 80 receives water through the water hole 81, and discharges water through the water supply check valve 110. The drainage tank 90 may receive condensed water through the drainage check valve 120, and may discharge condensed water through the water hole 81.

That is, the drainage check valve 120 of the drainage tank 90 may be disposed in a channel for receiving condensed water, not for discharging condensed water.

Unlike this embodiment, condensed water may fall into the drainage tank 90 through the water hole 81. In addition, condensed water may be automatically discharged through the drainage check valve 120.

Water that is condensed in the treatment chamber 12 and water that is condensed in the heat pump unit 50 are stored in the drainage tank 90.

A float installation part 93, at which the float cabinet 105 is installed, is formed in the drainage tank 90.

The float installation part 93 may be located at a height in the drainage tank 90 at which overflow does not occur even when an amount of condensed water that is generated during one cycle is stored therein.

That is, the float installation part 93 is located at a height in the drainage tank 90 at which overflow does not occur even when an amount of condensed water that is generated during one cycle is stored in the drainage tank 90.

When a drainage level sensor 101 of the drainage tank 90 senses a signal during the operation of the clothes treatment apparatus, therefore, the water in the drainage tank 90 does not overflow due to the condensed water that is additionally stored in the drainage tank 90.

The drainage level sensor 101 of the drainage tank 90 is located higher than the water supply level sensor 100 in the water supply tank 80.

The drainage level sensor 101 of the drainage tank 90 is identical in construction to the water supply level sensor 100 of the water supply tank 80. However, the drainage level sensor 101 of the drainage tank 90 is operated differently from the water supply level sensor 100 of the water supply tank 80.

For example, the sensor 104 of the drainage tank 90 does not sense the float 102 in a normal state. When the level of condensed water rises, the sensor 104 of the drainage tank 90 senses the float 102, which has been raised by buoyancy.

When the sensor 104 of the drainage tank 90 senses the float 102, the control unit 60 outputs a water drainage signal. When the water drainage signal is output, however, the overflow of condensed water does not occur during a cycle that is currently being performed.

Meanwhile, a lower cabinet 130, on which the water supply tank 80 and the drainage tank 90 are mounted, is disposed at the lower side of the tank installation space 73. The lower cabinet 130 defines the tank installation space 73 together with the tank module frame 71.

The lower cabinet 130 is an element that defines the lower part of the cabinet 10. The lower cabinet 130 is assembled with the tank module frame 71 to support the water supply tank 80 and the drainage tank 90.

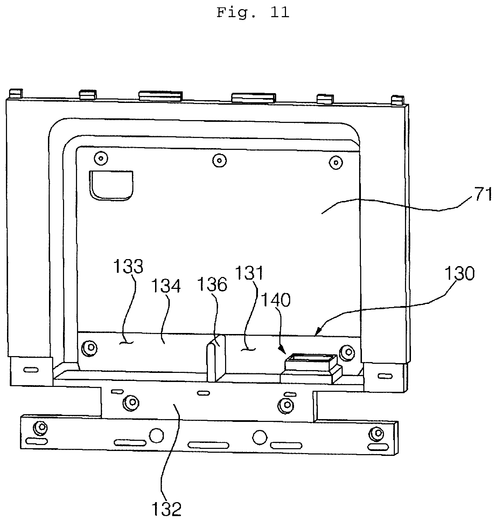

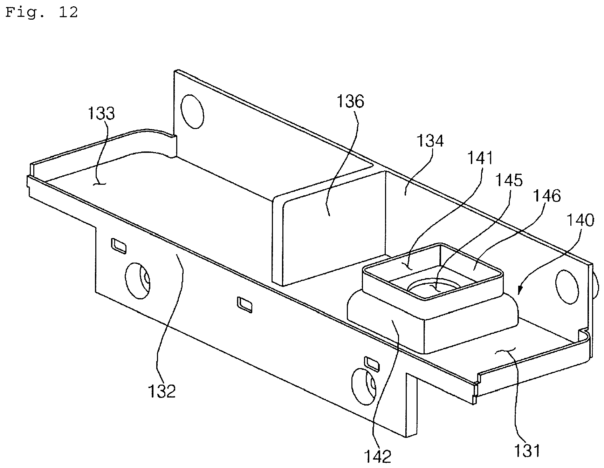

Hereinafter, the lower cabinet 130 will be described in detail with reference to FIGS. 11 and 12.

The lower cabinet 130 is an element that constitutes the cabinet 10.

In this embodiment, the lower cabinet 130 is provided with a flow channel, which connects the water supply tank 80 and the steam unit 40 to each other. In this embodiment, the tank module frame 71 is provided with a flow channel, which connects the drainage tank 90 and the heat pump unit 50 to each other.

The lower cabinet 130 includes a lower base 132, on which the water supply tank 80 and the drainage tank 90 are mounted, and a lower back 134 connected to the lower base 132, the lower back 134 being assembled with the tank module frame 71.

In this embodiment, a lower partition wall 136 is further provided to partition the lower base 132 into left and right base parts. One part of the lower base 132 partitioned by the lower partition wall 136 is defined as a first installation part 131, and the other part of the lower base 132 partitioned by the lower partition wall 136 is defined as a second installation part 133.

In this embodiment, the water supply tank 80 is mounted on the first installation part 131, and the drainage tank 90 is mounted on the second installation part 133. Unlike this embodiment, the lower partition wall 136 may not be provided.

The lower back 134 forms a continuous surface with the tank module frame 71.

The lower back 134 separates the cycle chamber 14 and the tank installation space 73 from each other together with the tank module frame 71.

The lower back 134 is disposed perpendicular to the lower partition wall 136.

The lower partition wall 136 partitions an installation space for the water supply tank 80 and an installation space for the drainage tank 90 from each other. In addition, the lower partition wall 136 prevents the water supply tank 80 or the drainage tank 90 from interfering with the drainage tank 90 or the water supply tank 80 when the water supply tank 80 or the drainage tank 90 is separated.

As will be described hereinafter, when the water supply tank 80 is shaken or lifted, a small amount of water from the water supply check valve 110 may be discharged into a receiving space 141. When the water from the water supply check valve 110 is repeatedly discharged into the receiving space 141, the water may overflow the receiving space 141. As a result, the water may overflow a water pocket 140. The lower partition wall 136 functions to prevent interference between the water supply tank 80 and the drainage tank 90, which are adjacent to each other.

In this embodiment, the water pocket 140 is disposed on the first installation part 131.

The water supply tank 80 is coupled to the water pocket 140.

The water supply check valve 110 of the water supply tank 80 is inserted into the water pocket 140.

When the water supply check valve 110 is inserted into the water pocket 140, a flow channel for connecting the water supply tank 80 and the steam unit 40 to each other is defined.

The water pocket 140 stores a predetermined amount of water discharged from the water supply check valve 110.

The water pocket 140 includes a pocket housing 142 formed at the lower base 132 such that the pocket housing 142 protrudes upward from the lower base 132, a water hole 145 formed at the pocket housing 142, the water hole 145 being provided with a flow channel communicating with the steam unit 40, and a water barrier 146 formed at the pocket housing 142, the water barrier 146 defining the receiving space 141 inside the pocket housing 142.

The water hole 145 is formed inside the pocket housing 142. The pocket housing 142 is coupled with the water supply check valve 110 of the water supply tank 80. The pocket housing 142 supports the water supply tank 80.

In this embodiment, the water barrier 146 protrudes upward from the pocket housing 142. Unlike this embodiment, the pocket housing 142 may be recessed to define the receiving space 141.

A small amount of water may be stored in the receiving space 141. The water hole 145 is located inside the receiving space 141. The water stored in the receiving space 141 may flow to the steam unit 40 via the water hole 145.

The receiving space 141 is formed so as to be open toward the tank installation space 73.

The water supply tank 80 may be mounted on the water barrier 146 such that the water supply tank 80 is supported by the water barrier 146.

When the water supply tank 80 is mounted on the water pocket 140, the water supply check valve 110 remains open.

As a result, when the water supply tank 80 is separated from the lower cabinet 130, a small amount of water may be discharged through the water supply check valve 110. The discharged water is stored in the receiving space 141. That is, when the water supply tank 80 is separated, a small amount of water discharged while the water supply check valve 110 is closed may be stored in the receiving space 141.

When the water supply tank 80 is repeatedly separated, water discharged through the water supply check valve 110 may overflow the water pocket 140.

In this embodiment, the present invention provides a control method that is capable of moving water stored in the receiving space 141 to the steam unit 40. As a result, it is possible to prevent water in the receiving space 141 from overflowing the receiving space 141 when the water supply tank 80 is repeatedly separated.

Water stored in the receiving space 141 is referred to as residual water.

A control method of the clothes treatment apparatus according to this embodiment includes a step (S10) of sensing the level of water in the steam unit 40, a step (S20) of determining whether the level of water in the steam unit 40 is low, a step (S30) of, upon determining that the level of water in the steam unit 40 is low, sensing the level of water in the water supply tank 80, a step (S40) of, when the level of water in the water supply tank 80 is low, raising a water replenishment alarm, a step (S50) of operating the water supply pump 45 such that the water from the water supply tank 80 flows to the steam unit 40 to remove water stored in the receiving space 141, a step (S60) of maintaining the operation of the water supply pump 45 for a predetermined period of time, and a step (S70) of stopping the operation of the water supply pump 45 after the predetermined period of time.

The low level means a reference level or less.

In this embodiment, the low level of the water in the water supply tank 80 means a state in which the sensor 140 cannot sense the float 120.

The control method according to this embodiment is performed in order to prevent water stored in the receiving space 141 from overflowing the receiving space 141 during separation of the water supply tank 80.

In a case in which insufficient water is stored in the water supply tank 80, the user may separate the water supply tank 80 from the lower cabinet 130, and may replenish the water supply tank 80 with water. Subsequently, the user may couple the water supply tank 80, which has been replenished with water, to the lower cabinet 130.

At this time, if residual water is stored in the receiving space 141, the water overflows the receiving space 141 when the water supply tank 80 is coupled to the lower cabinet 130.

The control method according to this embodiment is performed in order to move water stored in the receiving space 141 to the steam unit 40 such that residual water stored in the receiving space 141 is prevented from overflowing from the receiving space 141.

Steps S10 to S40 are performed in order to notify the user that it is necessary to replenish water.

At steps S10 and S20, the level of water stored in the steam unit 40 is sensed and, it is determined whether the level of water stored in the steam unit 40 is low. Upon determining that the level of water stored in the steam unit 40 is low, the level of water in the water supply tank 80 is sensed at step S30.

When the level of water stored in the water supply tank 80 sensed at step S30 is low, a water replenishment alarm is raised in order to notify the user that it is necessary to replenish water.

The water replenishment alarm may be raised through a display unit or a speaker unit of the clothes treatment apparatus.

Upon determining at step S30 that the level of water stored in the water supply tank 80 is low, the control unit 60 controls the water supply pump 45 to be operated such that the water from the water supply tank 80 flows to the steam unit 40.

In this embodiment, the control unit 60 controls the water supply pump 45 to be operated such that all of the water stored in the water supply tank 80 moves to the steam unit 40. As all of the water stored in the water supply tank 80 moves to the steam unit 40, it is possible to remove all of the residual water from the receiving space 141.

The residual water stored in the receiving space 141 moves to the steam unit 40, and is stored in the steam unit 40, by the operation of the water supply pump 45.

As the residual water is removed from the receiving space 141, it is possible to prevent the residual water from overflowing the receiving space 141 even though a small amount of water is discharged when the user separates the water supply tank 80 from the lower cabinet 130 to replenish water.

In this embodiment, after the water supply pump 45 is operated, the operation of the water supply pump 45 is continued for 10 seconds at step S60, and the operation of the water supply pump 45 is stopped at step S70.

The above-defined period of time, i.e. 10 seconds, is a period of time that is necessary to move all the water stored in the water supply tank 80 to the steam unit 40. The period of time may be set differently based on the size of the water supply tank 80.

In a case in which all of the water is removed from the water supply tank 80, as described above, it is possible to store a larger amount of water in the water supply tank 80 when the user replenishes the water supply tank 80 with water.

In other words, in a case in which all of the water is removed from the receiving space 141 and the water supply tank 80 during a residual water removal process, and then the user replenishes the water supply tank 80 with water, it is possible to maximize the amount of water that is stored in the clothes treatment apparatus. As a result, it is possible to reduce the frequency with which the user replenishes the water supply tank 80 with water.

Steps S50 to S70 are defined as a residual water removal step (S880).

Meanwhile, unlike this embodiment, the water supply pump 45 may be operated for a short period of time in order to remove only residual water stored in the receiving space 141.

In addition, unlike this embodiment, when the low level of the water in the water supply tank 80 is sensed, steps S50 to S70 may be performed in order to remove the residual water from the receiving space 141 without raising a water replenishment alarm.

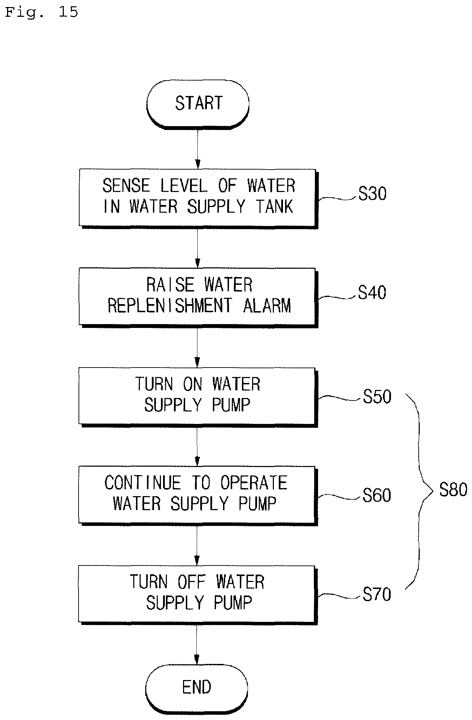

A second embodiment of the present invention will be described with reference to FIG. 15.

In the second embodiment of the present invention, determination as to whether the level of water in the steam unit 40 is low is omitted, and, upon determining that the level of water in the water supply tank 80 is low, the water supply pump 45 is immediately operated in order to remove residual water from the receiving space 141, unlike the first embodiment.

Since the water supply pump 45 is operated only when it is necessary to replenish the steam unit 40 with water, the steam unit 40 has a space that is capable of receiving water equivalent to the low level of water in the water supply tank 80.

In this embodiment, therefore, upon determining that the level of water in the water supply tank 80 is low, the water supply pump 45 is operated in order to move residual water from the receiving space 141 to the steam unit 40.

The water supply pump 45 may be sufficiently operated for a predetermined period of time in order to move all of the water from the water supply tank 80 to the steam unit 40.

In addition, the water supply pump 45 may be operated after a water replenishment alarm is raised. Alternatively, the water supply pump 45 may be operated irrespective of whether a water replenishment alarm is raised.

For example, unlike this embodiment, upon determining that the level of water in the water supply tank 80 is low, all of the residual water or the water remaining in the water supply tank 80 may be moved to the steam unit 40, and then a water replenishment alarm may be raised.

As a result, it is possible to prevent the user from separating the water supply tank during the movement of the water from the water supply tank 80 to the steam unit 40.

Other configurations of the second embodiment are identical to those of the first embodiment, and therefore a detailed description thereof will be omitted.

As is apparent from the above description, the control method of the clothes treatment apparatus according to the present invention has the following effects.

First, residual water discharged and stored in the receiving space during separation of the water supply tank is moved to the steam unit. Consequently, it is possible to prevent the residual water from overflowing the receiving space when the water supply tank is mounted.

Second, when it is determined that the level of water in the water supply tank is low, all of the residual water stored in the receiving space and all of the water remaining in the water supply tank are moved to the steam unit. Consequently, it is possible to securely remove the residual water from the receiving space.

Third, when it is determined that the level of water in the water supply tank is low, all of the residual water stored in the receiving space and all of the water remaining in the water supply tank are moved to the steam unit. Consequently, it is possible to maximize the amount of water stored in the clothes treatment apparatus when the user replenishes the water supply tank with water.

Fourth, when residual water is removed from the receiving space, the maximum amount of water that is usable is stored in the steam unit. Consequently, it is possible to reduce the number of times that water is replenished.

Fifth, the water supply tank installation space and the drainage tank installation space are partitioned by the lower partition wall. Consequently, it is possible to minimize the discharge of residual water.

It will be apparent that, although the embodiments of the present invention have been described above with reference to the accompanying drawings, the present invention is not limited to the above-described specific embodiments, and therefore various modifications and variations can be made by those skilled in the art without departing from the scope of the appended claims. Thus, it is intended that the modifications and variations should not be understood independently of the scope of the present invention. The above embodiments are therefore to be construed in all aspects as illustrative and not restrictive.

## Claims

1. A control method of a clothes treatment apparatus comprising:
a cabinet (10) partitioned into a treatment chamber (12) for allowing clothes to be hung therein, a cycle chamber (14) for allowing machinery to be installed therein, and a tank installation space (73) for allowing a separable tank to be installed therein;
a steam unit (40) disposed in the cycle chamber (14) for supplying steam into the treatment chamber (12);
a water supply tank (80) installed in the tank installation space, such that the water supply tank (80) is connected to the steam unit (40), for supplying water to the steam unit;
a water supply pump (45) configured to be operated to supply the water from the water supply tank (80) to the steam unit (40); and
a lower cabinet (130) disposed in the tank installation space (73) such that the water supply tank (80) is separably coupled to the lower cabinet (73);
**characterised in that** a receiving space (141) is formed at the lower cabinet (130), such that the receiving space (141) is connected to the steam unit (40), for supplying water to the steam unit (40) and storing residual water discharged during separation of the water supply tank (80), wherein
the control method comprises:
sensing a level of water in the water supply tank (80); and
upon determining that the level of water in the water supply tank (80) is low, operating the water supply pump (45) to move the residual water stored in the receiving space (141) to the steam unit(40).

2. The control method according to claim 1, further comprising raising a water replenishment alarm, wherein the step of raising the water replenishment alarm is performed between the step of sensing the level of water in the water supply tank (80) and the step of operating the water supply pump to move the residual water stored in the receiving space (141) to the steam unit (40) or after the step of operating the water supply pump (45) to move the residual water stored in the receiving space (141) to the steam unit (40).

3. The control method according to claims 1 or 2, wherein the step of operating the water supply pump (45) to move the residual water stored in the receiving space (141) to the steam unit (40) comprises operating the water supply pump (45) for a predetermined period of time and stopping operation of the water supply pump (45) after the predetermined period of time.

4. The control method according to any one of claims 1 to 3, wherein the step of operating the water supply pump (45) to move the residual water stored in the receiving space (141) to the steam unit (40) comprises operating the water supply pump (45) for a period of time necessary to move all of the water in the water supply tank (80) to the steam unit (40).

5. The control method according to any one of claims 1 to 4, further comprising:
sensing a level of water in the steam unit (40); and
determining whether the level of water in the steam unit (40) is low,
the step of sensing the level of water in the steam unit (40) and the step of determining whether the level of water in the steam unit (40) is low being performed before the step of sensing the level of water in the water supply tank (80), wherein
the step of sensing the level of water in the water supply tank (80) is performed upon determining that the level of water in the steam unit (40) is low.

6. The control method according to any one of claims 1 to 5, wherein the receiving space (141) is formed so as to be open toward the tank installation space (73).

7. The control method according to any one of claims 1 to 6, wherein the lower cabinet (130) further comprises a water pocket (140) formed so as to protrude into the tank installation space (73), the receiving space (141) is formed inside the water pocket (140), and the water supply tank (80) is mounted on the water pocket (140) such that the water supply tank (80) is supported by the water pocket (140).

8. The control method according to claim 7, wherein the lower cabinet (130) further comprises a water barrier (146) formed at the water pocket (140) such that the water barrier (146) protrudes upward from the water pocket (140), and the receiving space (141) is located inside the water barrier (146).

9. The control method according to any one of claims 1 to 8, wherein the lower cabinet (130) comprises:
a lower base (132) for allowing a drainage tank (90) for storing condensed water and the water supply tank (80) to be mounted thereon;
a lower back (134) connected to the lower base (132), the lower back (134) being assembled with a tank module frame (71) for partitioning the cycle chamber (14) and the tank installation space (73) from each other; and
a lower partition wall (136) for partitioning a first installation part (131) for allowing the water supply tank (80) to be installed thereon and a second installation part (133) for allowing the drainage tank (90) to be installed thereon from each other, and wherein
the receiving space (141) is disposed on the first installation part.

10. The control method according to any one of claims 1 to 9, further comprising raising a water replenishment alarm, wherein the step of raising the water replenishment alarm is performed between the step of sensing the level of water in the water supply tank (80) and the step of operating the water supply pump (45) to move the residual water stored in the receiving space to the steam unit (40) or after the step of operating the water supply pump (45) to move the residual water stored in the receiving space (141) to the steam unit (40), and wherein
the step of operating the water supply pump (45) to move the residual water stored in the receiving space (141) to the steam unit (40) comprises operating the water supply pump (45) for a predetermined period of time and stopping operation of the water supply pump (45) after the predetermined period of time.

11. The control method according to any one of claims 1 to 9, further comprising raising a water replenishment alarm, wherein the step of raising the water replenishment alarm is performed between the step of sensing the level of water in the water supply tank (80) and the step of operating the water supply pump (45) to move the residual water stored in the receiving space (141) to the steam unit (40) or after the step of operating the water supply pump (45) to move the residual water stored in the receiving space (141) to the steam unit (40), wherein
the step of operating the water supply pump (45) to move the residual water stored in the receiving space (141) to the steam unit (40) comprises operating the water supply pump (45) for a predetermined period of time and stopping operation of the water supply pump (45) after the predetermined period of time, and wherein
the step of operating the water supply pump (45) to move the residual water stored in the receiving space (141) to the steam unit (40) comprises operating the water supply pump (45) for a period of time taken to move all of the water in the water supply tank (80) to the steam unit (40).

12. The control method according to any one of claims 1 to 9, wherein
the step of operating the water supply pump (45) to move the residual water stored in the receiving space (141) to the steam unit (40) comprises operating the water supply pump (45) for a predetermined period of time and stopping operation of the water supply pump (45) after the predetermined period of time, and wherein
the step of operating the water supply pump (45) to move the residual water stored in the receiving space (141) to the steam unit (40) comprises operating the water supply pump (45) for a period of time taken to move all of the water in the water supply tank to the steam unit.

13. The control method according to any one of claims 1 to 12, further comprising:
sensing a level of water in the steam unit (40); and
determining whether the level of water in the steam unit (40) is low,
the step of sensing the level of water in the steam unit (40) and the step of determining whether the level of water in the steam unit (40) is low being performed before the step of sensing the level of water in the water supply tank (80), wherein
the step of sensing the level of water in the water supply tank (80) is performed upon determining that the level of water in the steam unit (40) is low, wherein
the step of operating the water supply pump (45) to move the residual water stored in the receiving space (141) to the steam unit (40) comprises operating the water supply pump (45) for a predetermined period of time and stopping operation of the water supply pump (45) after the predetermined period of time, and wherein
the step of operating the water supply pump (45) to move the residual water stored in the receiving space (141) to the steam unit (40) comprises operating the water supply pump for a period of time taken to move all of the water in the water supply tank (80) to the steam unit (40).

14. The control method according to any one of claims 1 to 13, wherein
the lower cabinet (130) further comprises a water pocket (140) formed so as to protrude into the tank installation space (73), the receiving space (141) is formed inside the water pocket (140), and the water supply tank (80) is mounted on the water pocket (140) such that the water supply tank (80) is supported by the water pocket (140), wherein
the lower cabinet (130) comprises:
a lower base (132) for allowing a drainage tank (90) for storing condensed water and the water supply tank (80) to be mounted thereon;
a lower back (134) connected to the lower base (132), the lower back (134) being assembled with a tank module frame (71) for partitioning the cycle chamber (14) and the tank installation space (73) from each other; and
a lower partition wall (136) for partitioning a first installation part (131) for allowing the water supply tank (80) to be installed thereon and a second installation part (133) for allowing the drainage tank (90) to be installed thereon from each other, and wherein
the receiving space (141) is disposed on the first installation part (131).

## Patentansprüche

1. Steuerverfahren einer Kleidungsbehandlungsvorrichtung, die aufweist:
einen Kasten (10), der unterteilt ist in eine Behandlungskammer (12), um zuzulassen, dass Kleidung in ihn gehängt wird, in eine Kreislaufkammer (14), um zuzulassen, dass maschinelle Anlagen darin installiert werden, und in einen Behälterinstallationsraum (73), um zuzulassen, dass ein trennbarer Behälter darin installiert wird;
eine Dampfeinheit (40), die in der Kreislaufkammer (14) angeordnet ist, um Dampf in die Behandlungskammer (12) zuzuführen;
einen Wasserversorgungsbehälter (80), der in dem Behälterinstallationsraum installiert ist, so dass der Wasserversorgungsbehälter (80) mit der Dampfeinheit (40) verbunden ist, um Wasser an die Dampfeinheit zuzuführen;
eine Wasserzuführungspumpe (45), die derart aufgebaut ist, dass sie betrieben wird, um das Wasser von dem Wasserversorgungsbehälter (80) an die Dampfeinheit (40) zuzuführen; und
einen unteren Kasten (130), der derart in dem Behälterinstallationsraum (73) angeordnet ist, dass der Wasserversorgungsbehälter (80) trennbar mit dem unteren Kasten (73) verbunden ist;
**dadurch gekennzeichnet, dass**
ein Aufnahmeraum (141) an dem unteren Kasten (130) ausgebildet ist, so dass der Aufnahmeraum (141) mit der Dampfeinheit (40) verbunden ist, um Wasser an die Dampfeinheit (40) zuzuführen und Restwasser, das während der Trennung des Wasserversorgungsbehälters (80) abgegeben wird, zuzuführen, wobei
das Steuerverfahren aufweist:
Abtasten eines Wasserstands in dem Wasserversorgungsbehälter (80); und
nach dem Bestimmen, dass der Wasserstand in dem Wasserversorgungsbehälter (80) niedrig ist, Betreiben der Wasserzuführungspumpe (45), um das in dem Aufnahmeraum (141) gelagerte Restwasser zu der Dampfeinheit (40) zu bewegen.

2. Steuerverfahren nach Anspruch 1, das ferner das Melden eines Wasserauffüllalarms aufweist, wobei der Schritt des Melden eines Wasserauffüllalarms zwischen dem Schritt des Abtastens des Wasserstands in dem Wasserversorgungsbehälter (80) und dem Schritt des Betreibens der Wasserzuführungspumpe, um das in dem Aufnahmeraum (141) gelagerte Restwasser zu der Dampfeinheit (40) zu bewegen, oder nach dem Schritt des Betreibens der Wasserzuführungspumpe (45), um das in dem Aufnahmeraum (141) gelagerte Restwasser zu der Dampfeinheit (40) zu bewegen, durchgeführt wird.

3. Steuerverfahren nach Anspruch 1 oder 2, wobei der Schritt des Betreibens der Wasserzuführungspumpe (45), um das in dem Aufnahmeraum (141) gelagerte Restwasser zu der Dampfeinheit (40) zu bewegen, das Betreiben der Wasserzuführungspumpe (45) über eine vorgegebene Zeitspanne und das Stoppen des Betriebs der Wasserzuführungspumpe (45) nach der vorgegebenen Zeitspanne aufweist.

4. Steuerverfahren nach einem der Ansprüche 1 bis 3, wobei der Schritt des Betreibens der Wasserzuführungspumpe (45), um das in dem Aufnahmeraum (141) gelagerte Restwasser zu der Dampfeinheit (40) zu bewegen, das Betreiben der Wasserzuführungspumpe (45) über eine Zeitspanne aufweist, die notwendig ist, um das gesamte Wasser in dem Wasserversorgungsbehälter (80) zu der Dampfeinheit (40) zu bewegen.

5. Steuerverfahren nach einem der Ansprüche 1 bis 4, das ferner aufweist:
Abtasten eines Wasserstands in der Dampfeinheit (40); und
Bestimmen, ob der Wasserpegel in der Dampfeinheit (40) niedrig ist,
wobei der Schritt des Abtastens des Wasserstands in der Dampfeinheit (40) und der Schritt des Bestimmens, ob der Wasserstand in der Dampfeinheit (40) niedrig ist, vor dem Schritt des Abtastens des Wasserstands in dem Wasserversorgungsbehälter (80) durchgeführt werden, wobei
der Schritt des Abtastens des Wasserstands in dem Wasserversorgungsbehälter (80) nach der Bestimmung, dass der Wasserstand in der Dampfeinheit (40) niedrig ist, durchgeführt wird.

6. Steuerverfahren nach einem der Ansprüche 1 bis 5, wobei der Aufnahmeraum (141) derart ausgebildet ist, dass er in Richtung des Behälterinstallationsraums (73) offen ist.

7. Steuerverfahren nach einem der Ansprüche 1 bis 6, wobei der untere Kasten (130) ferner ein Wasserfach (140) aufweist, das derart ausgebildet ist, dass es in den Behälterinstallationsraum (73) vorsteht, wobei der Aufnahmeraum (141) im Inneren des Wasserfachs (140) ausgebildet ist, und der Wasserversorgungsbehälter (80) auf dem Wasserfach (140) montiert ist, so dass der Wasserversorgungsbehälter (80) von dem Wasserfach (140) gehalten wird.

8. Steuerverfahren nach Anspruch 7, wobei der untere Kasten (130) ferner eine Wassersperre (146) aufweist, die an dem Wasserfach (140) ausgebildet ist, so dass die Wassersperre (146) von dem Wasserfach (140) nach oben vorsteht, und wobei der Aufnahmeraum (141) im Inneren der Wassersperre (146) angeordnet ist.

9. Steuerverfahren nach einem der Ansprüche 1 bis 8, wobei der untere Kasten (130) aufweist:
einen unteren Sockel (132), um zuzulassen, dass ein Abführungsbehälter (90) zum Lagern von Kondenswasser und der Wasserversorgungsbehälter (80) darauf montiert werden;
eine untere Rückseite (134), die mit dem unteren Sockel (132) verbunden ist, wobei die untere Rückseite (134) mit einem Behältermodulrahmen (71) montiert ist, um die Kreislaufkammer (14) und den Behälterinstallationsraum (73) voneinander zu unterteilen; und
eine untere Trennwand (136) zum Voneinander-Trennen eines ersten Installationsteils (131), um zuzulassen, dass der Wasserversorgungsbehälter (80) darauf installiert wird, und eines zweiten Installationsteils (133), um zuzulassen, dass der Abführungsbehälter (90) darauf installiert wird, und wobei
der Aufnahmeraum (141) auf dem ersten Installationsteil angeordnet ist.

10. Steuerverfahren nach einem der Ansprüche 1 bis 9, das ferner das Melden eines Wasserauffüllalarms aufweist, wobei der Schritt des Meldens des Wasserauffüllalarms zwischen dem Schritt des Abtastens des Wasserstands in dem Wasserversorgungsbehälter (80) und dem Schritt des Betreibens der Wasserzuführungspumpe (45), um das in dem Aufnahmeraum gelagerte Restwasser zu der Dampfeinheit (40) zu bewegen, oder nach dem Schritt des Betreibens der Wasserzuführungspumpe (45), um das in dem Aufnahmeraum (141) gelagerte Restwasser zu der Dampfeinheit (40) zu bewegen, durchgeführt wird, und wobei
der Schritt des Betreibens der Wasserzuführungspumpe (45), um das in dem Aufnahmeraum (141) gelagerte Restwasser zu der Dampfeinheit (40) zu bewegen, das Betreiben der Wasserzuführungspumpe (45) über eine vorgegebene Zeitspanne und das Stoppen des Betriebs der Wasserzuführungspumpe (45) nach der vorgegebenen Zeitspanne aufweist.

11. Steuerverfahren nach einem der Ansprüche 1 bis 9, das ferner das Melden eines Wasserauffüllalarms aufweist, wobei der Schritt des Meldens des Wasserauffüllalarms zwischen dem Schritt des Abtastens des Wasserstands in dem Wasserversorgungsbehälter (80) und dem Schritt des Betreibens der Wasserzuführungspumpe (45), um das in dem Aufnahmeraum (141) gelagerte Restwasser zu der Dampfeinheit (40) zu bewegen, oder nach dem Schritt des Betreibens der Wasserzuführungspumpe (45), um das in dem Aufnahmeraum (141) gelagerte Restwasser zu der Dampfeinheit (40) zu bewegen, durchgeführt wird, und wobei
der Schritt des Betreibens der Wasserzuführungspumpe (45), um das in dem Aufnahmeraum (141) gelagerte Restwasser zu der Dampfeinheit (40) zu bewegen, das Betreiben der Wasserzuführungspumpe (45) über eine vorgegebene Zeitspanne und das Stoppen des Betriebs der Wasserzuführungspumpe (45) nach der vorgegebenen Zeitspanne aufweist, und wobei
der Schritt des Betreibens der Wasserzuführungspumpe (45), um das in dem Aufnahmeraum (141) gelagerte Restwasser zu der Dampfeinheit (40) zu bewegen, das Betreiben der Wasserzuführungspumpe (45) über eine Zeitspanne aufweist, die notwendig ist, um das gesamte Wasser in dem Wasserversorgungsbehälter (80) zu der Dampfeinheit (40) zu bewegen.

12. Steuerverfahren nach einem der Ansprüche 1 bis 9, wobei
der Schritt des Betreibens der Wasserzuführungspumpe (45), um das in dem Aufnahmeraum (141) gelagerte Restwasser zu der Dampfeinheit (40) zu bewegen, das Betreiben der Wasserzuführungspumpe (45) über eine vorgegebene Zeitspanne und das Stoppen des Betriebs der Wasserzuführungspumpe (45) nach der vorgegebenen Zeitspanne aufweist, und wobei
der Schritt des Betreibens der Wasserzuführungspumpe (45), um das in dem Aufnahmeraum (141) gelagerte Restwasser zu der Dampfeinheit (40) zu bewegen, das Betreiben der Wasserzuführungspumpe (45) über eine Zeitspanne aufweist, die notwendig ist, um das gesamte Wasser in dem Wasserversorgungsbehälter zu der Dampfeinheit zu bewegen.

13. Steuerverfahren nach einem der Ansprüche 1 bis 12, das ferner aufweist Abtasten eines Wasserstands in der Dampfeinheit (40); und
Bestimmen, ob der Wasserstand in der Dampfeinheit (40) niedrig ist,
wobei der Schritt des Abtastens des Wasserstands in der Dampfeinheit (40) und der Schritt des Bestimmens, ob der Wasserstand in der Dampfeinheit (40) niedrig ist, vor dem Schritt des Abtastens des Wasserstands in dem Wasserzuführungsbehälter (80) durchgeführt werden, wobei
der Schritt des Abtastens des Wasserstands in dem Wasserversorgungsbehälter (80) nach dem Bestimmen, dass der Wasserstand in der Dampfeinheit (40) niedrig ist, durchgeführt wird, wobei
der Schritt des Betreibens der Wasserzuführungspumpe (45), um das in dem Aufnahmeraum (141) gelagerte Restwasser zu der Dampfeinheit (40) zu bewegen, das Betreiben der Wasserzuführungspumpe (45) über eine vorgegebene Zeitspanne und das Stoppen des Betriebs der Wasserzuführungspumpe (45) nach der vorgegebenen Zeitspanne aufweist, und wobei
der Schritt des Betreibens der Wasserzuführungspumpe (45), um das in dem Aufnahmeraum (141) gelagerte Restwasser zu der Dampfeinheit (40) zu bewegen, das Betreiben der Wasserzuführungspumpe über eine Zeitspanne aufweist, die notwendig ist, um das gesamte Wasser in dem Wasserversorgungsbehälter (80) zu der Dampfeinheit (40) zu bewegen.

14. Steuerverfahren nach einem der Ansprüche 1 bis 13,
wobei der untere Kasten (130) ferner ein Wasserfach (140) aufweist, das derart ausgebildet ist, dass es in den Behälterinstallationsraum (73) vorsteht, wobei der Aufnahmeraum (141) im Inneren des Wasserfachs (140) ausgebildet ist und der Wasserversorgungsbehälter (80) auf dem Wasserfach (140) montiert ist, so dass der Wasserversorgungsbehälter (80) von dem Wasserfach (140) gehalten wird, wobei
der untere Kasten (130) aufweist:
einen unteren Sockel (132), um zuzulassen, dass ein Abführungsbehälter (90) zum Lagern von Kondenswasser und der Wasserversorgungsbehälter (80) darauf montiert werden;
eine untere Rückseite (134), die mit dem unteren Sockel (132) verbunden ist, wobei die untere Rückseite (134) mit einem Behältermodulrahmen (71) montiert ist, um die Kreislaufkammer (14) und den Behälterinstallationsraum (73) voneinander zu unterteilen; und
eine untere Trennwand (136) zum Voneinander-Trennen eines ersten Installationsteils (131), um zuzulassen, dass der Wasserversorgungsbehälter (80) darauf installiert wird, und eines zweiten Installationsteils (133), um zuzulassen, dass der Abführungsbehälter (90) darauf installiert wird, und wobei
der Aufnahmeraum (141) auf dem ersten Installationsteil (131) angeordnet ist.

## Revendications

1. Procédé de commande d'un appareil de traitement de vêtements, comprenant :
une caisse (10) séparée en une chambre de traitement (12), pour permettre à des vêtements d'y être suspendus, une chambre de cycle (14), pour permettre à une machinerie d'y être installée, et un espace d'installation de réservoir (73), pour permettre à un réservoir séparable d'y être installé ;
une unité à vapeur (40) disposée dans la chambre de cycle (14) pour fournir de la vapeur dans la chambre de traitement (12) ;
un réservoir d'alimentation en eau (80) installé dans l'espace d'installation de réservoir, de telle sorte que le réservoir d'alimentation en eau (80) soit raccordé à l'unité à vapeur (40), pour fournir de l'eau à l'unité à vapeur ;
une pompe d'alimentation en eau (45) configurée pour être mise en fonctionnement pour fournir l'eau du réservoir d'alimentation en eau (80) à l'unité à vapeur (40) ; et
une caisse inférieure (130) disposée dans l'espace d'installation de réservoir (73) de telle sorte que le réservoir d'alimentation en eau (80) soit accouplé de façon séparable à la caisse inférieure (73) ;
**caractérisé en ce que**
un espace de réception (141) est formé dans la caisse inférieure (130), de telle sorte que l'espace de réception (141) soit raccordé à l'unité à vapeur (40), pour fournir de l'eau à l'unité à vapeur (40) et stocker de l'eau résiduelle évacuée durant la séparation du réservoir d'alimentation en eau (80), dans lequel le procédé de commande comprend :
la détection d'un niveau d'eau dans le réservoir d'alimentation en eau (80) ; et
lors de la détermination que le niveau d'eau dans le réservoir d'alimentation en eau (80) est bas, la mise en fonctionnement de la pompe d'alimentation en eau (45) pour déplacer l'eau résiduelle stockée dans l'espace de réception (141) vers l'unité à vapeur (40).

2. Procédé de commande selon la revendication 1, comprenant en outre le déclenchement d'une alarme de réapprovisionnement en eau, dans lequel l'étape du déclenchement de l'alarme de réapprovisionnement en eau est exécutée entre l'étape de la détection du niveau d'eau dans le réservoir d'alimentation en eau (80) et l'étape de la mise en fonctionnement de la pompe d'alimentation en eau pour déplacer l'eau résiduelle stockée dans l'espace de réception (141) vers l'unité à vapeur (40) ou après l'étape de la mise en fonctionnement de la pompe d'alimentation en eau (45) pour déplacer l'eau résiduelle stockée dans l'espace de réception (141) vers l'unité à vapeur (40).

3. Procédé de commande selon les revendications 1 ou 2, dans lequel l'étape de la mise en fonctionnement de la pompe d'alimentation en eau (45) pour déplacer l'eau résiduelle stockée dans l'espace de réception (141) vers l'unité à vapeur (40) comprend la mise en fonctionnement de la pompe d'alimentation en eau (45) pendant une période prédéterminée de temps et l'arrêt du fonctionnement de la pompe d'alimentation en eau (45) après la période prédéterminée de temps.

4. Procédé de commande selon l'une quelconque des revendications 1 à 3, dans lequel l'étape de la mise en fonctionnement de la pompe d'alimentation en eau (45) pour déplacer l'eau résiduelle stockée dans l'espace de réception (141) vers l'unité à vapeur (40) comprend la mise en fonctionnement de la pompe d'alimentation en eau (45) pendant une période de temps nécessaire pour déplacer la totalité de l'eau dans le réservoir d'alimentation en eau (80) vers l'unité à vapeur (40).

5. Procédé de commande selon l'une quelconque des revendications 1 à 4, comprenant en outre :
la détection d'un niveau d'eau dans l'unité à vapeur (40) ; et
la détermination que le niveau d'eau dans l'unité à vapeur (40) est bas ou non,
l'étape de la détection du niveau d'eau dans l'unité à vapeur (40) et l'étape de la détermination que le niveau d'eau dans l'unité à vapeur (40) est bas ou non étant exécutées avant l'étape de la détection du niveau d'eau dans le réservoir d'alimentation en eau (80), dans lequel
l'étape de la détection du niveau d'eau dans le réservoir d'alimentation en eau (80) est exécutée lors de la détermination que le niveau d'eau dans l'unité à vapeur (40) est bas.

6. Procédé de commande selon l'une quelconque des revendications 1 à 5, dans lequel l'espace de réception (141) est formé afin d'être ouvert vers l'espace d'installation de réservoir (73).

7. Procédé de commande selon l'une quelconque des revendications 1 à 6, dans lequel la caisse inférieure (130) comprend en outre une poche à eau (140) formée afin de faire saillie dans l'espace d'installation de réservoir (73), l'espace de réception (141) est formé à l'intérieur de la poche à eau (140), et le réservoir d'alimentation en eau (80) est monté sur la poche à eau (140) de telle sorte que le réservoir d'alimentation en eau (80) soit supporté par la poche à eau (140).

8. Procédé de commande selon la revendication 7, dans lequel la caisse inférieure (130) comprend en outre une barrière à eau (146) formée dans la poche à eau (140) de telle sorte que la barrière à eau (146) fasse saillie vers le haut à partir de la poche à eau (140), et l'espace de réception (141) est situé à l'intérieur de la barrière à eau (146).

9. Procédé de commande selon l'une quelconque des revendications 1 à 8, dans lequel la caisse inférieure (130) comprend :
une base inférieure (132) pour permettre à un réservoir de drainage (90), pour stocker de l'eau condensée, et au réservoir d'alimentation en eau (80) d'être montés sur celle-ci ;
un dos inférieur (134) raccordé à la base inférieure (132),
le dos inférieur (134) étant assemblé à un cadre de module de réservoir (71) pour séparer la chambre de cycle (14) et l'espace d'installation de réservoir (73) l'un de l'autre ; et
une paroi de séparation inférieure (136) pour séparer une première partie d'installation (131), pour permettre au réservoir d'alimentation en eau (80) d'être installé sur celle-ci, et une seconde partie d'installation (133), pour permettre au réservoir de drainage (90) d'être installé sur celle-ci, l'une de l'autre, et dans lequel l'espace de réception (141) est disposé sur la première partie d'installation.

10. Procédé de commande selon l'une quelconque des revendications 1 à 9, comprenant en outre le déclenchement d'une alarme de réapprovisionnement en eau, dans lequel l'étape du déclenchement de l'alarme de réapprovisionnement en eau est exécutée entre l'étape de la détection du niveau d'eau dans le réservoir d'alimentation en eau (80) et l'étape de la mise en fonctionnement de la pompe d'alimentation en eau (45) pour déplacer l'eau résiduelle stockée dans l'espace de réception vers l'unité à vapeur (40) ou après l'étape de la mise en fonctionnement de la pompe d'alimentation en eau (45) pour déplacer l'eau résiduelle stockée dans l'espace de réception (141) vers l'unité à vapeur (40), et dans lequel l'étape de la mise en fonctionnement de la pompe d'alimentation en eau (45) pour déplacer l'eau résiduelle stockée dans l'espace de réception (141) vers l'unité à vapeur (40) comprend la mise en fonctionnement de la pompe d'alimentation en eau (45) pendant une période prédéterminée de temps et l'arrêt du fonctionnement de la pompe d'alimentation en eau (45) après la période prédéterminée de temps.

11. Procédé de commande selon l'une quelconque des revendications 1 à 9, comprenant en outre le déclenchement d'une alarme de réapprovisionnement en eau, dans lequel l'étape du déclenchement de l'alarme de réapprovisionnement en eau est exécutée entre l'étape de la détection du niveau d'eau dans le réservoir d'alimentation en eau (80) et l'étape de la mise en fonctionnement de la pompe d'alimentation en eau (45) pour déplacer l'eau résiduelle stockée dans l'espace de réception (141) vers l'unité à vapeur (40) ou après l'étape de la mise en fonctionnement de la pompe d'alimentation en eau (45) pour déplacer l'eau résiduelle stockée dans l'espace de réception (141) vers l'unité à vapeur (40), dans lequel
l'étape de la mise en fonctionnement de la pompe d'alimentation en eau (45) pour déplacer l'eau résiduelle stockée dans l'espace de réception (141) vers l'unité à vapeur (40) comprend la mise en fonctionnement de la pompe d'alimentation en eau (45) pendant une période prédéterminée de temps et l'arrêt du fonctionnement de la pompe d'alimentation en eau (45) après la période prédéterminée de temps, et dans lequel
l'étape de la mise en fonctionnement de la pompe d'alimentation en eau (45) pour déplacer l'eau résiduelle stockée dans l'espace de réception (141) vers l'unité à vapeur (40) comprend la mise en fonctionnement de la pompe d'alimentation en eau (45) pendant une période de temps prise pour déplacer la totalité de l'eau dans le réservoir d'alimentation en eau (80) vers l'unité à vapeur (40).

12. Procédé de commande selon l'une quelconque des revendications 1 à 9, dans lequel
l'étape de la mise en fonctionnement de la pompe d'alimentation en eau (45) pour déplacer l'eau résiduelle stockée dans l'espace de réception (141) vers l'unité à vapeur (40) comprend la mise en fonctionnement de la pompe d'alimentation en eau (45) pendant une période prédéterminée de temps et l'arrêt du fonctionnement de la pompe d'alimentation en eau (45) après la période prédéterminée de temps, et dans lequel
l'étape de la mise en fonctionnement de la pompe d'alimentation en eau (45) pour déplacer l'eau résiduelle stockée dans l'espace de réception (141) vers l'unité à vapeur (40) comprend la mise en fonctionnement de la pompe d'alimentation en eau (45) pendant une période de temps prise pour déplacer la totalité de l'eau dans le réservoir d'alimentation en eau vers l'unité à vapeur.

13. Procédé de commande selon l'une quelconque des revendications 1 à 12, comprenant en outre :
la détection d'un niveau d'eau dans l'unité à vapeur (40) ; et
la détermination que le niveau d'eau dans l'unité à vapeur (40) est bas ou non,
l'étape de la détection du niveau d'eau dans l'unité à vapeur (40) et l'étape de la détermination que le niveau d'eau dans l'unité à vapeur (40) est bas ou non étant exécutées avant l'étape de la détection du niveau d'eau dans le réservoir d'alimentation en eau (80), dans lequel
l'étape de la détection du niveau d'eau dans le réservoir d'alimentation en eau (80) est exécutée lors de la détermination que le niveau d'eau dans l'unité à vapeur (40) est bas, dans lequel l'étape de la mise en fonctionnement de la pompe d'alimentation en eau (45) pour déplacer l'eau résiduelle stockée dans l'espace de réception (141) vers l'unité à vapeur (40) comprend la mise en fonctionnement de la pompe d'alimentation en eau (45) pendant une période prédéterminée de temps et l'arrêt du fonctionnement de la pompe d'alimentation en eau (45) après la période prédéterminée de temps, et dans lequel
l'étape de la mise en fonctionnement de la pompe d'alimentation en eau (45) pour déplacer l'eau résiduelle stockée dans l'espace de réception (141) vers l'unité à vapeur (40) comprend la mise en fonctionnement de la pompe d'alimentation en eau pendant une période de temps prise pour déplacer la totalité de l'eau dans le réservoir d'alimentation en eau (80) vers l'unité à vapeur (40).

14. Procédé de commande selon l'une quelconque des revendications 1 à 13, dans lequel
la caisse inférieure (130) comprend en outre une poche à eau (140) formée afin de faire saillie dans l'espace d'installation de réservoir (73), l'espace de réception (141) est formé à l'intérieur de la poche à eau (140), et le réservoir d'alimentation en eau (80) est monté sur la poche à eau (140) de telle sorte que le réservoir d'alimentation en eau (80) soit supporté par la poche à eau (140), dans lequel la caisse inférieure (130) comprend :
une base inférieure (132) pour permettre à un réservoir de drainage (90), pour stocker de l'eau condensée, et au réservoir d'alimentation en eau (80) d'être montés sur celle-ci ;
un dos inférieur (134) raccordé à la base inférieure (132), le dos inférieur (134) étant assemblé à un cadre de module de réservoir (71) pour séparer la chambre de cycle (14) et l'espace d'installation de réservoir (73) l'un de l'autre ; et
une paroi de séparation inférieure (136) pour séparer une première partie d'installation (131), pour permettre au réservoir d'alimentation en eau (80) d'être installé sur celle-ci, et une seconde partie d'installation (133), pour permettre au réservoir de drainage (90) d'être installé sur celle-ci, l'une de l'autre, et dans lequel l'espace de réception (141) est disposé sur la première partie d'installation (131).
